(19) Europäisches Patentamt
European Patent Office
Office européen des brevets

(11) Veröffentlichungsnummer: **0 161 484**
**B1**

(12) # EUROPÄISCHE PATENTSCHRIFT

(45) Veröffentlichungstag der Patentschrift: **21.09.88**

(51) Int. Cl.⁴: **C 08 G 65/44**

(21) Anmeldenummer: **85104343.0**

(22) Anmeldetag: **10.04.85**

(54) **Überwiegend ortho-verknüpfte Polyarylether.**

(30) Priorität: **19.04.84 DE 3414882**

(43) Veröffentlichungstag der Anmeldung: **21.11.85 Patentblatt 85/47**

(45) Bekanntmachung des Hinweises auf die Patenterteilung: **21.09.88 Patentblatt 88/38**

(84) Benannte Vertragsstaaten: **DE FR GB IT NL**

(56) Entgegenhaltungen:
**EP-A-0 061 691**
**DE-A-2 358 729**
**DE-A-2 446 425**
**DE-A-3 140 026**
**DE-B-1 745 432**
**US-A-3 306 875**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Stammann, Günter, Dr., Silesiusstrasse 78, D-5000 Koeln 80 (DE)**
Erfinder: **Grolig, Johann, Dr., Heinrich- Lübke-Strasse 22, D-5090 Leverkusen 1 (DE)**
Erfinder: **Waldmann, Helmut, Dr., Henry- T. von Böttinger Strasse 15, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



LIBER, STOCKHOLM 1988

**Beschreibung**

Die Erfindung betrifft überwiegend ortho-verknüpfte Polyarylether und ein Verfahren zu deren Herstellung aus para-substituierten Phenolen.

Substituierte Polyarylether gewisser Substitutionsmuster und Verfahren zu ihrer Herstellung durch Oxidation 2,6-disubstituierter Phenole sind bekannt (z. B. US-PS-3 306 874 und 3 306 875). Hochmolekulare Polyarylether werden nach diesen Schriften nur mit Phenolen erhalten, deren ortho-Positionen besetzt sind und die in para-Stellung reagieren.

Aus der US-PS-3 306 875 und "Kirk-Othmer, Encyclopedia of Chemical Technology", Vol. 18, New York 1982, Seite 602 ist bekannt, daß 4-Halophenole unter den üblichen Bedingungen der oxidativen Kupplung keine Polymeren ergeben, hingegen unter schärferen Bedingungen als Phenolate oder in Gegenwart stöchiometrischer Basenmengen unter Substitution des Halogens reagieren, so daß halogenfreies Poly(1,4-phenylenoxid) entsteht.

Aus "Encyclopedia of Polymer Science and Technology" Vol. 10, pp 92, New York 1969, Seite 94, ist bekannt, daß Phenole mit unbesetzten ortho-Positionen komplexe und im allgemeinen niedermolekulare Produkte ergeben.

Es wurde nun gefunden, Polyarylether aus para-substituierten Phenolen mit mindestens einer freien ortho-Position durch oxidative Kupplung unter Erhalt des para-Substituenten herzustellen. Daß die erfindungsgemäße Umsetzung zu derart substituierten Polyarylethern mit Katalysatorsystemen erfolgen kann war nicht zu erwarten.

Gegenstand der Erfindung ist daher ein Verfahren zur Herstellung von überwiegend ortho-verknüpften Polyarylethern mit 7 - 200 002 wiederkehrenden Einheiten, dadurch gekennzeichnet, daß Phenole der Formel (1)

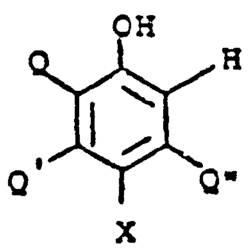

(I)

in welcher

X für Halogen wie Fluor, Chlor und Brom oder Cyan oder gegebenenfalls substituiertes Alkyl mit 1 bis 20 C-Atomen, Aryl mit 6 bis 10 C-Atomen, Aralkyl mit 7 bis 20 C-Atomen, Cycloalkyl mit 5 bis 10 C-Atomen und heterocyclische Reste mit 5 bis 12 Ringatomen, von denen bis zu 3 C-Atome durch Heteroatome wie N, O, S ersetzt sein können steht, sowie für die Gruppen $X_1$, $X_2$ und gegebenenfalls Z und in welcher

Q, Q', Q'' unabhängig voneinander für Wasserstoff, Substituenten der unter X beschriebenen Art mit 2 oder 3 C-Atomen, Methoxy, Trifluormethyl oder Phenoxy sowie - unabhängig von dieser Einschränkung - gegebenenfalls für Substituenten der Art Z stehen, wobei $X_1$ die Reste, die über ein O-Atom, ein S-Atom oder eine Carbonylgruppe mit dem Aromatenring des Phenols verbunden sind, der Formeln (1)

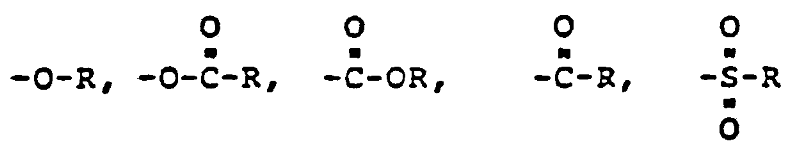

(1),

wobei R gegebenenfalls substituierten Kohlenwasserstoffresten oder heterocyclischen Resten der zuvor unter X definierten Art entspricht umfaßt, $X_2$ die Reste, die über Stickstoff mit dem Aromatenring des Phenols verbunden sind der Formeln (2)

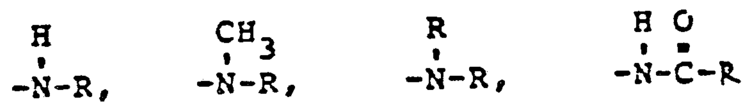

(2);

wobei

R die unter den Formeln (1) angegebene Bedeutung hat, umfaßt, Z den formelmäßig angegebenen Resten entspricht welche selbst weiter substituiert sein können mit $C_1$-$C_3$-Alkyl, $C_6$-$C_{10}$-Aryl, und Fluor und Chlor

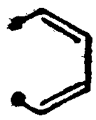 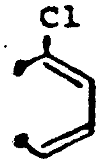 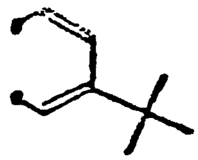 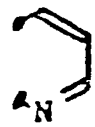 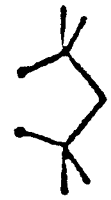

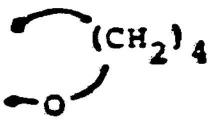 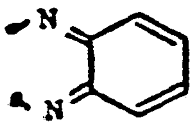 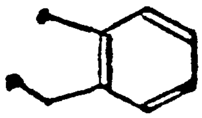 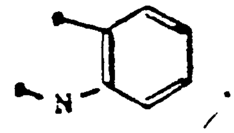

sowie 3,4-Dimethylphenol in Gegenwart von Kupfer oder Kupferverbindungen und einer organischen Stickstoffbase oder einer organischen Phosphorverbindung oder halogenhaltigen Phosphorverbindung als Katalysator bei einem Druck von 10 bis 1000 bar und einer Temperatur von 50 bis 220° C oxidiert werden.

Ein weiterer Gegenstand des Verfahrens sind die nach dem erfindungsgemäßen Verfahren erhaltenen Polyarylether mit 7 bis 200 002 wiederkehrenden Einheiten.

Im erfindungsgemäßen Verfahren können z. B. Phenole der Formel (I) verwendet werden, die außer X nur einen von Wasserstoff verschiedenen Substituenten wie Fluor, Chlor, Cyan und Methyl tragen.

Weiterhin können z. B. Phenole der Formel (I) verwendet werden, die als Substituent X Chlor oder einen Kohlenwasserstoffrest tragen und alle übrigen Substituenten Wasserstoff sind.

Im erfindungsgemäßen Verfahren können zwei oder mehrere verschiedene Phenole der Formel (I) eingesetzt werden.

Das erfindungsgemäße Verfahren verwendet als Einsatzstoffe para-substituierte Phenole der Formel (I), Oxidationsmittel und die anspruchsgemäßen Katalysatoren.

Der para-ständige Substituent X der Phenole sollte unter den Umsetzungsbedingungen oxidationsbeständig sein. Die Substituenten bzw. Reste X können weiter substituiert sein, beispielsweise durch Cyan, Halogen, wie Fluor und Chlor, nichtprimäre Amingruppen und/oder Ethergruppen und sie bestehen einschließlich dieser gegebenenfalls vorhandenen Substituenten aus bis zu 20 C-Atomen. Die Reste $X_1$, $X_2$ und gegebenenfalls Z betreffen weiter unten erläuterte Fälle.

Beispiele geeigneter Reste X sind:

Methyl, Trifluormethyl, Ethyl, Butyl, tert.-Butyl, 1,1-Dimethylpropyl, 1,1,2,2-Tetramethylpropyl, Dodecyl, Cyclohexyl, Perchlorcyclohexyl, 4-Methoxycyclohexyl, Cyclopentyl, Cycloheptyl, Benzyl, 1-Methyl-1-phenylethyl, 1-Methyl-1-(4-Chlorphenyl)-ethyl, Phenyl, 2-Chlorphenyl, 4-Fluorphenyl, 4-tert.-Butylphenyl, Pentachlorphenyl, 4-Nitrophenyl, 4-Pyridyl, 2-Oxazolyl, 4-Morpholinyl, Imidazolyl, Chinolyl, 1-Naphthyl, 2-Naphtyl und ähnliche. Bevorzugte Reste sind tert.-Butyl, 1,1-Dimethylpropyl, 1,1,2,2-Tetramethylpropyl, 1-Methyl-1-phenylethyl und Phenyl.

Als Phenole der Formel (I) können solche eingesetzt werden, die als Substituent X Chlor oder einen Kohlenwasserstoffrest tragen und sonst nur Wasserstoffatome.

Es können zwei oder mehrere verschiedene Phenole der Formel (I) eingesetzt werden.

Die Gruppe $X_1$ umfaßt Reste, die über ein C-atom, ein S-Atom oder eine Carbonylgruppe mit dem Aromatenring des Phenols verbunden sind, insbesondere umfaßt sie Reste der Formeln (1)

$$-O-R,\quad -O-\overset{\overset{O}{\|}}{C}-R,\quad -\overset{\overset{O}{\|}}{C}-OR,\quad -\overset{\overset{O}{\|}}{C}-R,\quad -\underset{\underset{O}{\|}}{\overset{\overset{O}{\|}}{S}}-R \qquad (1),$$

wobei R gegebenenfalls substituierten Kohlenwasserstoffresten oder heterocyclischen Resten der zuvor unter X definierten Art entspricht; d. h. die phenolischen Einsatzstoffe, die die Gruppierung $X_1$ enthalten sind z. B. Hydrochinonmonoether, Hydrochinonmonoester, para-Hydroxybenzoesäureester oder para-Hydroxyphenylsulfone.

Die Gruppe $X_2$ umfaßt Reste die über Stickstoff mit dem Aromatenring des Phenols verbunden sind, insbesondere solche der Formeln (2)

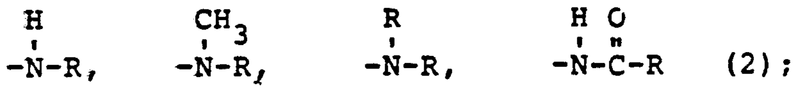 (2);

wobei
R die bei Formeln (1) angegebene Bedeutung hat, d. h. die phenolischen Einsatzstoffe, die die Gruppe $X_2$ enthalten sind z. B. N-substituierte para-Aminophenole.

Die Substituenten Q, Q' und Q'' sind Wasserstoff oder Substituenten der unter X definierten Art mit 2 oder 3 C-Atomen, z. B. Ethyl, Ethoxy, 1-Propyl, aber auch Methoxy, Trifluormethyl oder Phenoxy.

Bevorzugt ist Q, Q' und Q'' Wasserstoff und X Halogen, Alkyl und Aralkyl.

Ein Sonderfall geeigneter Einsatzstoffe a) liegt vor, wenn X und Q' bzw. X und Q'' oder Q und Q' jeweils zusammen für einen zweibindigen Substituenten stehen und so ein anneliertes Ringsystem bilden. Solche Einsatzstoffe a) können durch die allgemeinen Formeln Ia) bis Ic) beschrieben werden, wobei die Phenole der Formeln Ib) und Ic) bevorzugt sind:

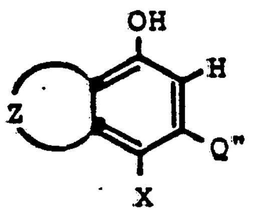

(Ia)

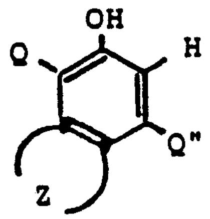

(Ib)

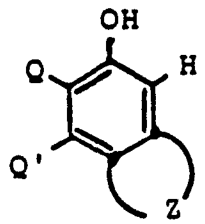

(Ic)

Die Substituenten Q, Q' und Q'' entsprechen hierbei den bei Formel (I) gegebenen Definitionen, vorzugsweise Wasserstoff. Die zweibindigen Reste Z entsprechen beispielsweise den hier formelmäßig angegebenen und können selbst weiter substituiert sein, z. B. durch $C_1$-$C_3$-Alkyl, $C_6$-$C_{10}$-Aryl und Chlor und Fluor. z. B. folgende zweibindige Reste:

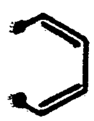
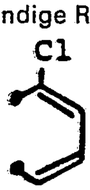
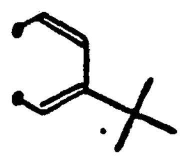
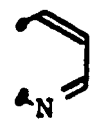
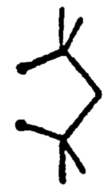

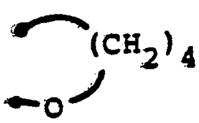
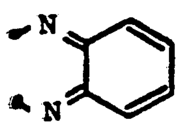
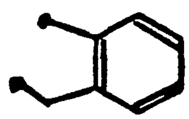
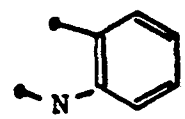

Geeignete phenolische Einsatzstoffe a) des erfindungsgemäßen Verfahrens sind beispielsweise 4-Methylphenol, 4-tert.-Butylphenol, 4-(1,1-Dimethylpropyl)-phenol, 4-(1,1,2,2-Tetramethylpropyl)-phenol, 4-Dodecylphenol, 4-Cyclohexylphenol, 4-(Perchlorcyclohexyl)-phenol, 4-(4-Methoxycyclohexyl)-phenol, 4-Benzylphenol, 4-(1-Methyl-1-phenylethyl)-phenol, 4-[1-Methyl-1-(4-chlorphenyl)-ethyl]-phenol, 4-Phenylphenol, 4-(2-Chlorphenyl)-phenol, 4-(4-Fluorphenyl)-phenol, 4-(4-tert.-Butylphenyl)-phenol, 4-(Pentachlorphenyl)-phenol, 4-(4-Nitrophenyl)-phenol, 4-(Pentachlorphenyl)-phenol, 4-(2-Pyridyl)-phenol, 4-(2-Oxazolyl)-phenol, 4-(4-Pyridyl)-phenol, 4-(4-Morpholinyl)-phenol, 2-Chlor-4-methylphenol, 3-Chlor-4-tert.-butyl-phenol, 2-Fluor-4-tert.-butylphenol, 2-Methoxy-4-tert.-butylphenol, 2-Phenoxy-4-tert.-butylphenol, 3-(4-tert.-Butylphenoxy)-4-tert.-butylphenol, 3-(4-Fluorphenoxy)-4-tert.-butylphenol, 4-Methoxyphenol, 4-Phenoxyphenol, 4-Hydroxydiphenylsulfon, 4-Hydroxydiphenylcarbonat, 4-Fluorphenol, 2,4-Difluorphenol, 4-Chlorphenol, 2,4-Dichlorphenol, 3,4-Dichlorphenol, 4-Bromphenol, 4-Jodphenol, 4-(N-Methylamino)-phenol, 4-(N-Phenylamino)-phenol, 4-N-Methyl-N-phenylaminophenol, 4-Hydroxybenzophenon, 4-Benzoesäure-4-hydroxyphenylester, N-Benzoyl-4-aminophenol und N-(4-Hydroxyphenyl)-ethylurethan, 3,4,5-Trichlorphenol, 2,3,4-Trichlorphenol, 2,3-Dichlor-4-methylphenol und 4-Chlor-3,5-dimethylphenol.

Weitere geeignete Einsatzstoffe Ia) sind beispielsweise α-Naphthol, β-Naphthol, 8-Chlornaphthol-2, 4-Chlornaphthol-2, 4-Chlornaphthol-1, 6-Hydroxychinolin, 7-Hydroxychinolin, 2-Hydroxyphenazin, 2-Hydroxycarbazol, Phenanthrol-2 und 1,1,3,3-Tetramethyl-5-indanol.

Bevorzugte phenolische Einsatzstoffe der Formel (I) sind: 2,4-Dichlorphenol, 3,4-Dichlorphenol, 4-Chlorphenol sowie Phenole die als Substituent X Kohlenwasserstoffreste tragen. Besonders bevorzugte sind 4-Chlorphenol, 4-tert.-Butylphenol, 4-(1,1-Dimethylpropyl)-phenol, 4-(1,1,2,2-Tetramethylpropyl)-phenol, 4-(1-Methyl-1-phenylethyl)-phenol und 4-Phenylphenol.

Zur Herstellung gemischter Polyarylether (Copolymere) können zwei oder mehrere, vorzugsweise zwei verschiedene Phenole der Formel (I) in beliebigen Verhältnissen untereinander zu erfindungsgemäßen Polyarylethern umgesetzt werden.

Die Umsetzung der phenolischen Einsatzstoffe I) zu den erfindungsgemäßen Polyarylethern erfolgt in Gegenwart eines oder mehrerer Oxidationsmittel. Als Oxidationsmittel sind beispielsweise Sauerstoff und Verbindungen von $Cu^{2+}$ geeignet. Unter den Umsetzungsbedingungen sollten diese Verbindungen zumindest teilweise gelöst vorliegen. Falls sie als schwerlösliche Verbindungen, z. B. Oxide, vorliegen, können sie zusammen mit aktivierenden Halogeniden verwendet werden. Von diesen Oxidationsmitteln sind Kupfer-II-Verbindungen bevorzugt. So kann beispielsweise schwerlösliches Kupfer-II-oxid oder basisches Kupfer-II-carbonat eingesetzt werden, welches mit einer katalytischen Menge eines Chlorids, insbesondere Kupfer-II-chlorid und/oder Pyridinhydrochlorid aktiviert wird. Nach der Umsetzung mit dem phenolischen Einsatzprodukt kann die abgetrennte Kupferverbindung, z. B. nach Behandlung mit Luft, wieder verwendet werden.

Werden Kupfer-II-Verbindungen als Oxidationsmittel eingesetzt, kann auf die Zugabe eines weiteren Katalysators verzichtet werden. Ein Amin sollte jedoch zugegeben werden.

Als besonders bevorzugtes Oxidationsmittel wird Sauerstoff, z. B. in Form von Luft verwendet. Soll Sauerstoff unverdünnt eingesetzt werden, sollte die Dosierung im allgemeinen in kleinen Mengen bzw. mit einem geringen Gasdurchsatz erfolgen. Vorzugsweise wird Sauerstoff verdünnt mit einem oder mehreren Inertgasen, beispielsweise Helium, Argon, Kohlendioxid und Stickstoff eingesetzt, besonders bevorzugt wird Luft.

Der Partialdruck des Sauerstoffs soll im Verhältnis zur Summe der Partialdrücke der Inertgase von 1 : 100 bis 1 : 1, vorzugsweise im Verhältnis 1 : 100 bis 1 : 4 stehen.

Zur Molekulargewichtslenkung und Steuerung der Reaktionsgeschwindigkeit ist es auch möglich, anstelle oder zusätzlich zu den vorgenannten Inertgasen Kohlenmonoxid zu verwenden. Beispielsweise können Gasgemische aus Kohlenmonoxid und etwa 5 bis 25 Vol.-% Luft eingesetzt werden.

Die phenolischen Einsatzstoffe der Formel (I) werden in Gegenwart der anspruchsgemäßen Katalysatoren zu Polyarylethern umgesetzt.

Als Katalysator werden Kupferverbindungen c), z. B. organische und anorganische Verbindungen des einwertigen und/oder des zweiwertigen Kupfers, wie Kupfer-I-chlorid, Kupfer-II-chlorid, Kupfer-I-bromid, Kupfer-II-bromid, Kupfer-I-fluorid, Kupfer-II-fluorid, Kupfer-I-iodid, Kupfer-II-nitrat, Kupfersulfat, basisches Kupferchlorid bzw. Atakamit ($CuCl_2$ x $Cu(HO)_2$), Kupferhydroxid, Kupferoxichlorid, Kupfer-II-acetat, Kupfer-IIoxalat, Kupfer-II-laurat, Kupfer-II-palmitat, Kupfer-II-salicylat, Kupfer-I-tetrachloraluminat, Chelatkomplexe, wie beispielsweise Kupfer-II-bis-(2-aminophenolat), gegebenenfalls auch Hydrate, Ammoniakate und Aminkomplexe der vorgenannten Verbindungen verwendet.

Sind lösliche Chloride oder Bromide oder Verbindungen, die unter Reaktionsbedingungen leicht Chloridionen oder Bromidionen abspalten, zugegen, so können auch unlösliche oder schlechtlösliche Kupferverbindungen, beispielsweise Kupfer-I-oxid, Kupfer-II-oxid, Kupfer-II-hydroxid, Kupfer-II-chromit, basisches Kupfer-II-carbonat ($(Cu(CO_3)_2$ x $Cu(OH)_2)$ u. ä. oder fein verteiltes metallisches Kupfer eingesetzt werden.

Als Verbindungen c) werden bevorzugt Kupfer-II-acetat, Kupfer-II-chlorid (auch als Hydrat), Kupfer-II-oxichlorid ($Cu_2OCl_2$), sowie in Mischungen mit Kupfer-II-chlorid oder aktivierenden Chloriden auch Kupfer-II-oxid und basisches Kupfercarbonat ($CuCO_3$ x $Cu(OH)_2$) eingesetzt.

Die Katalysatormenge c) beträgt im allgemeinen 0,1 bis 30 Mol-% bezogen auf phenolischen Einsatzstoff a), vorzugsweise 0,1 bis 15 Mol-%.

Für das erfindungsgemäße Verfahren wird eine organische Stickstoffbase d) als weitere Katalysatorkomponente verwendet. Diese Komponente d) kann ein tertiäres, ein sekundäres, ein primäres, insbesondere ein α-verzweigtes primäres Amin sein. Geeignete Amine für das erfindungsgemäße Verfahren sind beispielsweise in US-PS-3 134 753, US-PS-3 306 874, US-PS-3 306 875 und DE-OS-3 029 429 genannt. Auch heterocyclische Stickstoffbasen sind als Katalysatorkomponente d) geeignet, die mehr als ein Stickstoffatom in dem heterocyclischen Ringsystem aufweisen. Beispielsweise können 1-Butylamin, Dimethylamin, Triethylamin, tert.-Butylamin, Neopentylamin, 1,4-Dimethylpentylamin, N-Ethylanilin, N,N-Diethylanilin, Pyridin, 4-(Dimethylamino)-pyridin, Picoline, Lutidine, Chinolin, Isochinolin, Carbazol, Imidazol, Pyrazol, Benzimidazol, Phenazin, Triazol, Tetramethylethylendiamin, Tetramethyltetramethylendiamin, 1,4-Diazabicyclo(2,2,2)-octan, 1,10-Phenanthrolin, 1,4,8,11-Tetramethyl-1,4,8,11-tetraazacyclotetradecan, N,N,N'N'-Tetrakis(diphenylphosphinomethyl)-ethylendiamin und Ethylenbis(salicylimin) verwendet werden. Als organische Stickstoffbase d) werden tertiäre Amine und Heteroaromaten mit 1 oder 2 N-Ringatomen bevorzugt, besonders bevorzugt werden Pyridin, Chinolin, Benzimidazol, Isochinolin und Tetramethylethylendiamin.

Polymere organische Amine können als Katalysatorkomponente d) ebenfalls verwendet werden, beispielsweise Polyethylenimine oder Polyvinylpyridin. Die Amine d) können in freier Form und als Hydrochloride oder komplexiert mit Metallsalzen, insbesondere als Metallhalogenidaminkomplexe zur Anwendung kommen. Pyridinhydrochlorid und Pyridinkomplexe halogenhaltiger Kupferverbindungen werden besonders bevorzugt. Von den polymeren Aminen ist beispielsweise Polyvinylpyridin für die Komplexierung von Kupfer-II-chlorid geeignet.

Von den möglichen Katalysatorkombinationen werden solche aus Kupfer-II-acetat, Kupfer-II-chlorid oder Kupfer-I-chlorid und Pyridin bzw. Tetramethylethylendiamin und die Dreierkombination aus Kupfer-II-oxid, Kupfer-II-chlorid(hydrat) und Pyridinhydrochlorid besonders bevorzugt.

Die organische Stickstoffbase d) wird in einer solchen Menge eingesetzt, daß auf 1 Mol Kupferionen in Katalysator C etwa 0,3 bis 4 Mol basische Stickstoffatome entfallen, vorzugsweise 0,3 bis 2,2 Mol.

Der Einsatz von Reglern bzw. Cokatalysatoren ist bekannt (z. B. US-PS-3 306 875, DE-OS-2 228 071). Solche Zusätze sind bei Herstellung der erfindungsgemäßen Polyarylether ebenfalls möglich, ebenso Metallsalze von Fe, Co, Ni, Mn und Pb wie $FeCl_3$, $Fe(OAC)_3$, $MnCl_2$ usw.

Zur Reaktionsbeschleunigung und/oder Molekulargewichtsregulierung können lösliche Metallsalze, deren Metallkationen in verschiedenen Wertigkeitsstufen vorliegen können, mitverwendet werden, z. B. die oben genannten. Die Gewichtsmenge solcher Metallsalzzusätze, die insbesondere als Metallhalogenide verwendet werden, ist im allgemeinen geringer als die der Katalysatorkomponente c).

Organische Phosphorverbindungen können anstelle der Aminbasen d) des Katalysators und zusätzlich eingesetzt werden. Z. B. sind substituierte Phosphine, Phosphinoxid, Phosphorsäureester und Phosphorigsäureester als Reglerzusätze in Gewichtsmengen, die 20 bis 100 Gew.-%, vorzugsweise 40 bis 60 Gew.-% der Aminbase d) entsprechen, geeignet. Weiterhin können auch halogenhaltige Phosphorverbindungen, beispielsweise $PCl_3$, $PCl_5$, $PCl_2(C_6H_5)_3$ eingesetzt werden. Die organischen Phosphorverbindungen können auch an Stelle des Amins d) eingesetzt werden. Auch Chelatbildner, die sowohl Phosphor als auch einen Aminstickstoff aufweisen, sind als Katalysatorkomponente d) geeignet.

Die erfindungsgemäße Umsetzung wird im allgemeinen in Gegenwart von Lösungsmitteln durchgeführt, welche unter den Umsetzungsbedingungen den phenolischen Einsatzstoff a) und zumindest teilweise den Katalysator mit den Komponenten c) und d) lösen können.

Geeignete Lösungsmittel sollten unter diesen Umsetzungsbedingungen stabil sein. Beispielsweise können halogenierte Kohlenwasserstoffe wie Dichlormethan, Chloroform, Tetrachlorkohlenstoff, 1,1,2,2-Tetrachlorethan, Chlorbenzol, Dichlorbenzole und andere chlorierte Aromaten, Ketone wie Benzophenon, Ether wie Diphenylether, Amide wie Dimethylformamid, N-Methylpyrrolidon, Nitromethan und Sulfolan verwendet werden.

Das phenolische Einsatzprodukt a) kann auch ohne weitere Lösungsmittel eingesetzt werden, so daß nicht umgesetztes überschüssiges Einsatzprodukt als Reaktionsmedium dient. Dies kann vorteilhaft sein, wenn hohe Anteile niedermolekularer Produkte erwünscht sind.

Vorzugsweise enthält die Reaktionsmischung etwa 50 bis 90 Gew.-% Lösungsmittel, bezogen auf Gesamtgewichtsmenge aller im Umsetzungsmedium enthaltenen Komponenten.

Die Umsetzung der phenolischen Einsatzstoffe der Formel (I) zu den erfindungsgemäßen Polyarylethern erfolgt bei Reaktionstemperaturen von 50 bis 220°C, vorzugsweise von 50 bis 180°C und besonders bevorzugt von 100 bis 180°C.

Es kann vorteilhaft sein, die geeignete Temperatur z. B. auf den Einsatzstoff a) abzustimmen. Der Druck beträgt 10 bar bis 1000 bar, vorzugsweise 30 bis 250 bar.

Wird kein gasförmiges Oxidationsmittel verwendet, so kann der Druck z. B. durch den Dampfdruck des Lösungsmittels oder durch ein Inertgas eingestellt werden.

Das Molekulargewicht der erfindungsgemäßen Polyarylether bzw. die Molekulargewichtsverteilung kann durch geeignete Maßnahmen, z. B. durch die Reaktionsparameter beeinflußt werden. Will man möglichst hohe Molekulargewichte erzielen, kann z. B. das Oxidationsmittel im stöchiometrischen Verhältnis oder mit etwa bis zu 20 % stöchiometrischem Überschuß eingesetzt werden, und man läßt bei 100 bis 180°C eine Stunde bis etwa zwei Tage reagieren, wobei der Katalysator die Komponente c) und eine der bevorzugten Komponenten d) enthält. Der Sauerstoffpartialdruck kann dann mindestens 10 % des Gesamtdruckes, gemessen zu Reaktionsbeginn, und der Gesamtdruck bei Reaktionstemperatur mindestens 30 bar betragen.

Bei niedrigerer Temperatur, niedrigerem Gesamtdruck und/oder unterstöchiometrischer Menge an Oxidationsmittel sowie verkürzter Reaktionszeit können geringere Umsätze der phenolischen Einsatzstoffe und Polyarylether mit niedrigerem Molekulargewicht $M_n$ erhalten werden.

Ähnlich kann sich die Zugabe von Eisen, Mangan- oder Bleisalzen auswirken. Vorteilhafter kann ein geringeres Molekulargewicht $M_n$ durch Verwendung von Kohlenmonoxid und/oder den vorgenannten organischen Phosphorverbindungen eingestellt werden, da diese Molekulargewichtsregulierung auch bei hohen Umsätzen der phenolischen Einsatzstoffe möglich ist.

Die verfahrensgemäße Herstellung der Polyarylether kann kontinuierlich oder diskontinuierlich in geeigneten Druckreaktoren bzw. Autoklaven erfolgen. Beispielsweise kann die Umsetzung diskontinuierlich in einem Rührautoklaven durchgeführt werden, oder die Umsetzung wird im Autoklav unter Einleiten bzw. Durchleiten eines sauerstoffhaltigen Reaktionsgases durchgeführt. Für die kontinuierliche Herstellung ist beispielsweise eine Rührkesselkaskade oder eine Kaskade von Strahldüsenreaktoren geeignet, wobei die Gasphase im Gleichstrom, im Gegenstrom oder im Kreuzstrom geführt werden kann.

Die Aufarbeitung der fest-flüssigen Reaktionsgemische kann nach dem Entspannen auf Normaldruck auf verschiedene Weise erfolgen. Beispielsweise kann der feste Katalysator nach einem üblichen Verfahren der fest-flüssig-Trennung abgetrennt werden. Abgetrennter Katalysator kann in die Reaktion zurückgeführt und erneut verwendet werden.

Insbesondere kann bei Verwendung der bevorzugten Katalysatorkombinationen in den bevorzugten Mengen der Katalysator nahezu vollständig in fester Form abgetrennt werden.

Die Reaktionslösung kann dann, gegebenenfalls nach einer Säure-wäsche, durch Destillation oder Fällung aufgearbeitet werden. Im Falle der destillativen Aufarbeitung werden in Apparaten verschiedener Druck- und Temperaturstufen Lösungsmittel, evtl. nicht umgesetzter phenolischer Einsatzstoffe und Oligomerfraktionen neben dem polymeren Rückstand erhalten. Wird das Produkt ausgefällt, wird die Reaktionslösung in ein Fällungsmedium, beispielsweise einen niedrigen Alkohol, vorzugsweise einen $C_1$-$C_3$ Alkohol welcher sauer oder neutral eingestellt ist, unter kräftigem Rühren eingetragen, wobei das Polymer ausfällt und die übrigen Bestandteile in der Lösung verbleiben. Diese kann nach Abtrennen des Polymers, z. B. destillativ, aufgearbeitet werden. Das gewonnene Polymer kann durch Fällen über Konzentrations- oder Temperaturgradienten weiter gereinigt bzw. fraktioniert werden.

Oligomerfraktionen mit niederem Molekulargewicht können in höhermolekulare Produkte überführt werden, indem sie in die Reaktion zurückgeführt werden, vorzugsweise zusammen mit phenolischem Einsatzstoff a).

Gegenstand der Erfindung sind weiterhin die Verfahrensprodukte, welche im wesentlichen die Strukturelemente ortho- und/oder meta-verknüpfter Polyarylether und einen Substituenten X pro etherverknüpftem Aromatenring aufweisen mit 7 bis 200 002 wiederkehrenden Einheiten. Die erfindungsgemäßen Verfahrensprodukte stellen oligomere oder polymere Polyarylether dar und liegen im allgemeinen als Gemische mit bestimmten Molekulargewichten bzw. Molekulargewichtsverteilungen vor. Durch moderne Trennmethoden ist es möglich, im Bereich der niederen Oligomeren Einzelverbindungen zu isolieren.

Die erfindungsgemäßen Polyarylether können mit Hilfe der Formel (II) beschrieben werden. Die mittleren Molekulargewichte $M_n$ betragen etwa 500 bis 500 000, vorzugsweise 1 500 bis 50 000. Die Molekulargewichte $M_w$ können bis zum 100fachen dieser Werte betragen.

Die erfindungsgemäß hergestellten Polyarylether können durch Formel (II)

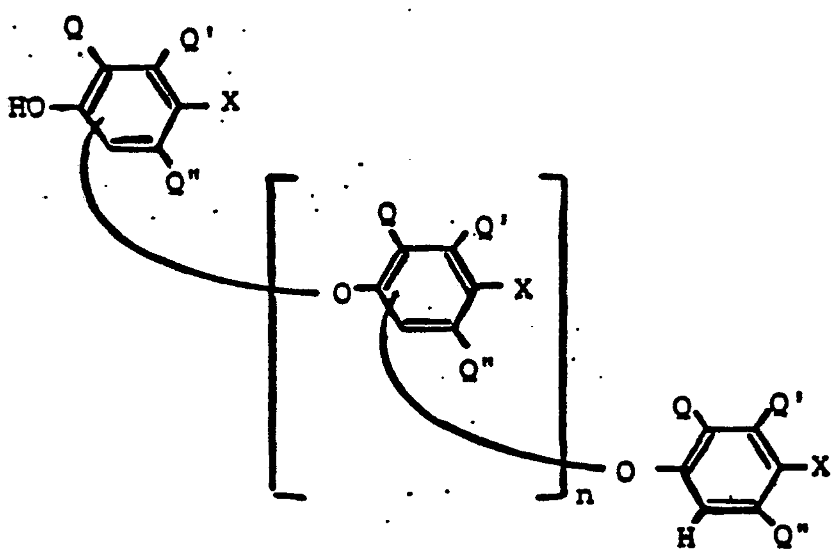

(II),

in welcher
n für eine ganze Zahl von 5 bis 200 000 steht und
Q, Q' und Q'' die bei Formel I angegebene Bedeutung haben im wesentlichen beschrieben werden.

Für die erfindungsgemäßen Polyarylether steht n für eine Zahl von 5 bis 200 000, vorzugsweise 15 bis 200 000.

Neben den Etherbindungen, welche zu 90 Mol-% (bezogen auf eine Momomereinheit) mindestens vorliegen können, kann in geringerem Umfang bis zu 10 Mol-% (bezogen auf Monomereinheiten) auch Kern-Kern-Verknüpfungen mit entsprechender Zahl kettenständiger Phenolgruppen vorliegen.

Außerdem können die Verfahrensprodukte, insbesondere an den Kettenenden chinoide Strukturen aufweisen.

Die formelmäßige Darstellung der erfindungsgemäßen Polyarylether dient lediglich einer allgemeinen Charakterisierung. So können beispielsweise auch Strukturen bis zu 10 Mol-% (bezogen auf Monomereinheiten) vorliegen, die dadurch entstanden sind, daß ausgehend von 4-Halogenphenolen eine Etherbindung unter Substitution des Halogens eintritt. Ebenso sind verzweigte Aryletherstrukturen möglich.

Die erfindungsgemäß hergestellten Polyether erweisen sich in weiten Molekulargewichtsbereichen als chemisch einheitlich (z. B. gemäß IR-, NMR-Spektrum). Sie liegen weit überwiegend als ortho-verknüfte Polyether vor.

Die physikalischen Eigenschaften der erfindungsgemäßen Produkte können je nach Art der Substituenten und je nach Molekulargewicht sehr verschieden sein. Im allgemeinen bilden sie bei Raumtemperatur spröde, harzartige Stoffe von hell bis dunkelbrauner Farbe. Sie können jedoch auch als helle amorphe Pulver vorliegen. Im Molekulargewichtsbereich bis etwa $M_n$ 1000 liegen die Erweichungspunkte der Oligomergemische im

allgemeinen bei 50 bis etwa 120°C, können aber bei Raumtemperatur auch noch flüssig sein. Liegen die Molekulargewichte $M_n$ über etwa 5000, so weisen die erfindungsgemäßen Polyarylether im allgemeinen Erweichungspunkte über 250°C auf; je nach Art der Substituenten liegt der Zersetzungsbeginn im Bereich von etwa 220°C bis etwa 350°C. Die erfindungsgemäßen Polyarylether sind im allgemeinen, d. h. wenn keine hydrophilen Substituenten in den Resten X bzw. Q, Q', Q'' vorliegen, in Wasser praktisch nicht löslich, in aprotischen, polaren, organischen Lösungsmitteln hingegen gut löslich. Die Löslichkeit in Alkoholen und in Kohlenwasserstoffen ist stark abhängig von der Art der Substituenten. Beispielsweise können die alkylsubstituierten Polyether in aromatischen und in aliphatischen Kohlenwasserstoffen, wie z. B. Benzol und n-Hexan gelöst werden.

Die erfindungsgemäßen Polyarylether der allgemeinen Formel (I) können Verwendung als Kunststoffadditive, als Emulgatoren, Vorprodukte hierfür, als Lackkomponenten und als Vorstufen für Duroplaste finden.

## Beispiele

### Allgemeine Versuchsdurchführung

Die Umsetzung der Phenole mit Luft wurde in 0,3 l bzw. 0,7 l-Edelstahlautoklaven oder in einem emaillierten 1,3 l-Stahlautoklaven wie folgt durchgeführt:

Nach dem Beschicken des Autoklaven mit den flüssigen und festen Einsatzstoffen bzw. Katalysatoren (Angabe in Gew.-%) wurde bei Raumtemperatur Luft bzw. bei einigen Versuchen Kohlenmonoxid und Luft oder Stickstoff und Luft mit den angegebenen Drucken aufgepreßt. In 30 bis 40 Minuten wurde unter Rühren auf Reaktionstemperatur aufgeheizt und über die angegebene Reaktionszeit bei dieser Temperatur gehalten. Gegebenenfalls wurde das Aufpressen des Gasgemisches und das Aufheizen in mehreren Reaktionszyklen wiederholt. Nach beendeter Reaktionsphase wurde jeweils entspannt und dabei eine Gasprobe zur gaschromatographischen Analyse gezogen.

Die erhaltenen Reaktionsgemische wurden filtriert, um ausgefallene Feststoffe, z. B. den Katalysator, zu entfernen. Die so erhaltenen Reaktionslösungen wurden zunächst zur Ermittlung des Umsatzes des phenolischen Einsatzstoffes quantitativ gaschromatographisch analysiert; danach wurde mittels der Gelpermeationschromatographie (Methodenbeschreibung siehe unten) die Molekulargewichtsverteilung bestimmt.

Die Reaktionsprodukte werden ohne Berücksichtigung des Einsatzphenols durch den Zahlenmittelwert des Molekulargewichts ($M_n$) und den Gewichtsmittelwert des Molekulargewichts ($M_w$) charakterisiert. Außerdem wird das Molekulargewicht angegeben, welches nach dem Integral der Verteilungskurve 70 % der Polymermasse als obere Grenze einschließt ($M_{70}$).

### Gelpermeationschromatographie - Methodenbeschreibung

In einem Eigenbau Flüssigchromatographen, ausgestattet mit einer Trennsäulenkombination von 180 cm Gesamtlänge und 0,8 cm Durchmesser (TSK-Gele 2000/3000/4000/6000/GMH 6 / GMH 6 von Toyo Soda, $\bar{d}p$ = 10 µm) und zwei Detektoren (Waters Festwellen-UV-Detektor M 440, λ-254 nm und Waters Differentialrefraktometer R 401) wurde mit frisch destilliertem Dichlormethan als Eluent bei 25°C und 1,0 $cm^3$/min Fließgeschwindigkeit chromatographiert.

Die Auswertung erfolgte gegen eine Eichkurve nach handelsüblichen, ionisch polymerisierten Polystyrol-Standards über einen Tischrechner auf die differentielle und integrale Massenverteilung sowie $M_n$ und $M_w$.

### Beispiel 1

Einwaage: 70,5 % ortho-Dichlorbenzol (433 g), 27,3 % 4-Chlorphenol, 1,1 % Kupfer-II-acetat und 1,1 % Pyridin.
Bedingungen: 100 bar Luft, 1 Stunde 180°C im 1,3 l Autoklaven.
Umsatz 4-Chlorphenol: 94,5 %
$M_n$: 2400 $M_w$: 120 000 $M_{70}$: 8300

**Beispiel 2**

Einwaage wie in Beispiel 1.
Bedingungen: 4 Reaktionszyklen mit jeweils frischem Gasgemisch 100 bar CO/25 bar Luft, 4 mal 1 Stunde bei 180° C im 1,3 l Autoklaven.
Umsatz 4-Chlorphenol: 84 %
$M_n$: 1600 $M_w$: 24 000 $M_{70}$: 4200

**Beispiel 3**

Einwaage wie in Beispiel 1.
Bedingungen: 4 Reaktionszyklen mit jeweils frischem Gasgemisch 100 bar $N_2$/25 bar Luft, 4 mal 1 Stunde bei 180° C im 1,3 l Autoklaven.
Umsatz 4-Chlorphenol: 96 %
$M_n$: 2800 $M_w$: 560 000 $M_{70}$: 9500

**Beispiel 4**

Einwaage: 69,9 % ortho-Dichlorbenzol (100 g), 27,0 % 4-Chlorphenol, 1,0 % Kupfer-II-oxid, 1,0 % Kupfer-II-chlorid und 1,0 % Triphenylphosphin.
Bedingungen: 2 Reaktionszyklen mit jeweils frischem Gasgemisch 100 bar CO/25 bar Luft, 2 mal 1 Stunde bei 180° C im 0,3 l Autoklaven.
Umsatz 4-Chlorphenol: 49 %
$M_n$: 1200 $M_w$: 1600 $M_{70}$: 3500

**Beispiel 5**

Einwaage: 69,89 % ortho-Dichlorbenzol (433 g), 26,98 % 4-Chlorphenol, 1,05 % Kupfer-II-oxid, 1,05 % Kupfer-II-chlorid, 1,05 % Pyridinhydrochlorid.
Bedingungen: 100 bar Luft, 1 Stunde bei 150° C im 1,3 l Autoklaven.
Umsatz 4-Chlorphenol: 97 %
$M_n$: 2000 $M_w$: 582 000 $M_{70}$: 9500

**Beispiel 6**

Einwaage wie in Beispiel 5.
Bedingungen: zwei Reaktionszyklen mit jeweils frischem Gasgemisch 60 bar $N_2$/60 bar Luft, 2 mal 1 Stunde bei 150° C im 1,3 l Autoklaven.
Umsatz 4-Chlorphenol: 99 %
$M_n$: 1800 $M_w$: 690 000 $M_{70}$: 10 000

**Beispiel 7**

Einwaage: 68,93 % ortho-Dichlorbenzol (100 g), 26,60 % 4-Chlorphenol, 1,03 % Kupfer-II-oxid, 1,03 % Kupfer-II-chlorid, 1,03 % Pyridinhydrochlorid und 1,38 % N,N,N'N'-Tetramethylethylendiamin.
Bedingungen: 100 bar Luft, 1 Stunde bei 150° C im 0,3 l Autoklaven.
Umsatz 4-Chlorphenol: 98 %

$M_n$: 1500 $M_w$: 1 175 000 $M_{70}$: 13 000

**Beispiele 8 bis 12**

Einwaage: 69,64 % ortho-Dichlorbenzol (100 g), 26,88 % 4-Chlorphenol, 1,04 % Kupfer-II-oxid, 1,39 % Kupfer-II-chlorid, 1,04 % Amin (siehe Tabelle 1).
Bedingungen: 100 bar Luft, 1 Stunde bei 150° C im 0,3 l Autoklaven.
Ergebnisse siehe Tabelle 1.

**Tabelle 1**

| Beispiel Nr. | Amino | $M_n$ | $M_w$ | $M_{70}$ | Umsatz % 4-Chlorphenol |
|---|---|---|---|---|---|
| 8 | Pyridin | 1410 | 648 380 | 11 000 | 98 |
| 9 | Chinolin | 1260 | 395 100 | 4 800 | 97,5 |
| 10 | Isochinolin | 1310 | 832 140 | 17 000 | 97 |
| 11 | Imidazol | 570 | 57 560 | 1 080 | 96 |
| 12 | Benzimidazol | 850 | 27 360 | 2 000 | 94 |

**Beispiel 13**

Einwaage wie in Beispiel 5
Bedingungen: 100 bar Luft, 1 Stunde bei 180° C im 1,3 l Autoklaven

Die Produktlösung wird vom Katalysator abfiltriert, dreimal mit 10 %-iger Salzsäure und danach mit wäßriger Natriumhydrogencarbonatlösung neutral gewaschen. Die Lösung wird am Rotationsverdampfer (bis 150° C, bis 2 mbar) eingeengt. Der verbleibende Rückstand (90,3 g) wird zur Hälfte einer fraktionierenden Fällung aus Aceton mit n-Heptan als Fällungsmittel unterworfen. Die erhaltenen Fraktionen (s. Tabelle) erwiesen sich in der chemischen Zusammensetzung, mit Ausnahme der niedermolekularen Fraktion und des Restes nach der Elementaranalyse und den Spektren (IH, $^1$H-NMR, $^{13}$C-NMR) als weitgehend einheitlich.

**Tabelle:** Ergebnisse der fraktionierenden Fällung
Bsp. 13

| Fällung | | Elementaranalyse Gew.-% | | | | Molekulargewicht | |
|---|---|---|---|---|---|---|---|
| Fraktion | Gew.-% | C | H | O | Cl | $M_n$ | $M_w$ |
| Einsatz | 100,00 | 56,15 | 2,5 | 13,4 | 27,7 | 950 | 2630 |
| 1 | 3,13 | 58,5 | 2,6 | 13,5 | 24,5 | 1590 | 18900 |
| 2 | 1,12 | 58,6 | 2,8 | 14,6 | 24,3 | 1320 | 9560 |
| 3 | 4,15 | 58,5 | 2,55 | 14,6 | 24,4 | 1710 | 8830 |
| 4 | 9,28 | 58,4 | 2,6 | 14,3 | 24,3 | 2090 | 5450 |
| 5 | 10,08 | 58,3 | 2,6 | 14,9 | 24,5 | 1970 | 4340 |
| 6 | 7,97 | 58,4 | 2,6 | 13,8 | 24,8 | 2130 | 4160 |
| 7 | 9,00 | 58,4 | 2,55 | 14,4 | 25,0 | 1450 | 2400 |
| 8 | 8,84 | 58,3 | 2,9 | 13,6 | 25,4 | 1040 | 1750 |
| 9 | 10,25 | 58,5 | 2,65 | 13,8 | 25,1 | 1020 | 1510 |
| 10 | 2,33 | 58,3 | 2,6 | 13,7 | 24,3 | 810 | 1150 |
| Rest | 31,56 | 58,8 | 3,65 | 12,8 | 22,9 | 450 | 690 |
| Verlust | 2,29 | - | - | - | - | - | - |

**Beispiele 14 bis 17**

Einwaage: 66,67 % ortho-Dichlorbenzol (100 g) 30,00 % 4-tert.-Butylphenol, 1,00 % Kupfer-II-oxid, 1,33 % Kupfer-II-chlorid und 1,00 % Amin (siehe Tabelle 2).
Bedingungen: 100 bar Luft, 1 Stunde bei 150° C im 0,3 l Autoklaven.

Ergebnisse siehe Tabelle 2.

**Tabelle 2**

| Beispiel Nr. | Amin | $M_n$ | $M_w$ | $M_{70}$ | Umsatz % 4-tert.-Butylphenol |
|---|---|---|---|---|---|
| 14 | Pyridin | 2000 | 258 800 | 5500 | 97 |
| 15 | Imidazol | 2000 | 17 000 | 5000 | 96 |
| 16 | 2,5-Diamino-2,5-dimethyl-hexan | 1400 | 2 940 | 3300 | 98 |
| 17 | 1,2,4-Triazol | 2010 | 575 000 | 13000 | 35 |

**Beispiel 18**

Einwaage: 66,9 % ortho-Dichlorbenzol (430 g), 30,10 % 4-tert.-Butylphenol, 1,00 % Kupfer-II-oxid, 1,00 % Kupfer-II-chlorid und 1,00 % Pyridinhydrochlorid.
Bedingungen: 100 bar Luft, 1 Stunde bei 150°C im 1,3 l Autoklaven.
Aufarbeitung: Das erkaltete Reaktionsgemisch wurde von ausgefallenem Katalysator abfiltriert (22 g). Das Filtrat (615 g) wurde zur Polymerfällung in eine Lösung von 4214 g Isopropanol und 86 g wäßrige Salzsäure unter schnellem Rühren (Doppel-Scheiben-Rührer, 2800 Umdrehungen/Minute) eingetropft. Das Ausgefallene wird abfiltriert, getrocknet und ergibt 99 g eines hellgelben Pulvers, welches bei 280 bis 300°C unter Zersetzung erweicht.
$M_n$: 3230 $M_w$: 25 100 $M_{70}$: 13 000

Die Flüssigphase aus der Fällung wird im Vakuum vom Lösungsmittel befreit, in Methylenchlorid aufgenommen, mit Natriumhydrogencarbonatlösung neutral gewaschen und nach dem Trocknen über Natriumsulfat erneut im Vakuum zur Trockene eingeengt. Es bleiben 80 g eines braunen, spröden Harzes mit einem Schmelzbereich von 150 bis 170° und nachstehende Daten zurück:
$M_n$: 900 $M_w$: 5500 $M_{70}$: 2000

**Beispiel 19**

Ein wie im Beispiel 18 umgesetztes Reaktionsgemisch wird von ausgefallenen Katalysator befreit, dreimal mit 10 %-iger Salzsäure gewaschen und über Natriumcarbonat getrocknet. Die Lösung wird am Rotationsverdampfer im Vakuum (bis 1 mbar, bis 100°C Badtemperatur) von Leichtsiedern befreit. Der so erhaltene Rückstand (170 g) wird in 1000 g siedendem Isopropanol aufgenommen. Beim Abkühlen auf Raumtemperatur fällt ein gelber Feststoff aus, der abfiltriert, gewaschen und getrocknet wird.

Der Feststoff (844 g) schmilzt bei 310°C unter leichter Zersetzung und kann durch die nachstehenden Daten charakterisiert werden:
$M_n$: 2880 $M_w$: 263 300 $M_{70}$: 9000

Aus der Isopropanolphase werden nach dem Einengen 115 g braunes sprödes Harz vom Schmelzpunkt 204°C mit folgenden Daten erhalten:
$M_n$: 1600 $M_w$: 282 000 $M_{70}$: 4200

**Beispiel 20**

Es wurde wie in Beispiel 14 gearbeitet, jedoch wurde Methylenchlorid statt ortho-Dichlorbenzol verwendet.
Umsatz 4-tert.-Butylphenol: 94 %
$M_n$: 2070 $M_w$: 248 000 $M_{70}$: 5500

**Beispiel 21**

Einwaage: 66,90 % ortho-Dichlorbenzol (430 g) 30,10 % 4-tert.-Butylphenol und 3,0 % des wiedergewonnenen Katalysators aus Beispiel 18.
Bedingungen: 100 bar Luft, 1 Stunde bei 150° C im 1,3 l Autoklaven.
Umsatz 4-tert.-Butylphenol: 96 %

$M_n$: 3820 $M_w$: 315 000 $M_{70}$: 11 000

**Beispiel 22**

Einwaage: 66,9 % ortho-Dichlorbenzol (430 g), 20,1 % 4-tert.-Butylphenol, 10,0 % Harz mit $M_n$ 900 aus Beispiel 18, 1,0 % Kupfer-II-oxid, 1,0 % Kupfer-II-chlorid und 1,0 % Pyridinhydrochlorid.
Bedingungen: 100 bar Luft, 1 Stunde bei 150° C im 1,3 l Autoklaven.
$M_n$: 3420 $M_w$: 282 000 $M_{70}$: 10 000

**Beispiel 23**

Einwaage: 73,0 % ortho-Dichlorbenzol (100 g), 23,7 % 4-Methylphenol, 1,1 % Kupfer-II-oxid, 1,1 % Kupfer-II-chlorid und 1,1 % Pyridinhydrochlorid.
Bedingungen: 100 bar Luft, 12 Stunden bei 80° C im 0,3 l Autoklaven.
Umsatz 4-Methylphenol: 96 %
$M_n$: 1350 $M_w$: 532 310 $M_{70}$: 10 000

**Beispiel 24**

Einwaage: 71,15 % ortho-Dichlorbenzol (100 g), 26,04 % 3,4-Dimethylphenol, 2,01 % Kupfer-I-chlorid und 0,71 % Pyridin.
Bedingungen: 100 bar Luft, 2 Stunden bei 150° C im 0,3 l Autoklaven.
Umsatz 3,4-Dimethylphenol: 98 %
$M_n$: 870 $M_w$: 78 600 $M_{70}$: 2500

**Beispiel 25**

Einwaage: 64,54 % ortho-Dichlorbenzol (100 g), 32,91 % 4-Phenylphenol, 1,90 % Kupfer-I-chlorid und 0,65 % Pyridin.
Bedingungen: 100 bar Luft, 2 Stunden bei 150° C im 0,3 l Autoklaven.
Umsatz 4-Phenylphenol: 95 %
$M_n$: 2020 $M_w$: 437 000 $M_{70}$: 10 000

**Beispiel 26**

Einwaage: 59,68 % ortho-Dichlorbenzol (100 g), 37,96 % 4-(1-Methyl-1-phenylethyl)-phenol, 1,76 ( Kupfer-I-chlorid und 0,6 % Pyridin.
Bedingungen: 100 bar Luft, 2 Stunden bei 150° C im 0,3 l Autoklaven.
Umsatz 4-(1-Methyl-1-phenylethyl)-phenol: 97 %
$M_n$: 2050 $M_w$: 80 100 $M_{70}$: 4000

**Beispiel 27**

Einwaage: 65,29 % ortho-Dichlorbenzol (100 g), 32,13 % 4-(1,1-Dimethylpropyl)-phenol, 1,93 % Kupfer-I-chlorid und 0,65 % Pyridin.
Bedingungen: 100 bar Luft, 2 Stunden bei 150° C im 0,3 l Autoklaven.
Umsatz 4-(1,1-Dimethylpropyl)-phenol: 96 %
$M_n$: 1880 $M_w$: 90 900 $M_{70}$: 4400

**Beispiel 28**

Einwaage: 67,72 % ortho-Dichlorbenzol (100 g), 24,38 % 4-tert.-Butylphenol, 4,48 % 4-Hydroxybenzonitril, 1,02 % Kupfer-II-oxid, 1,02 % Kupfer-II-chlorid und 1,02 % Pyridinhydrochlorid.
Bedingungen: 100 bar Luft, 1 Stunde bei 150° C im 0,3 l Autoklaven.
Umsatz 4-tert.-Butylphenol: 95 %
Umsatz: 4-Hydroxybenzonitril: 100 %
$M_n$: 1940 $M_w$: 5710 $M_{70}$: 5000

**Patentansprüche**

1. Verfahren zur Herstellung von überwiegend ortho-verknüpften Polyarylethern mit 7 - 200 002 wiederkehrenden Einheiten, dadurch gekennzeichnet, daß Phenole der Formel (I)

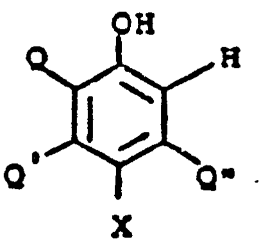

(I)

in welcher
X für Halogen wie Fluor, Chlor und Brom oder Cyan oder gegebenenfalls substituiertes Alkyl mit 1 bis 20 C-Atomen, Aryl mit 6 bis 10 C-Atomen, Aralkyl mit 7 bis 20 C-Atomen, Cycloalkyl mit 5 bis 10 C-Atomen und heterocyclische Reste mit 5 bis 12 Ringatomen, von denen bis zu 3 C-Atome durch Heteroatome wie N, O, S ersetzt sein können, steht, sowie für die Gruppen $X_1$, $X_2$ und gegebenenfalls Z und in welcher
Q, Q', Q'' unabhängig voneinander für Wasserstoff, Substituenten der unter X beschriebenen Art mit 2 oder 3 C-Atomen, Methoxy, Trifluormethyl oder Phenoxy sowie - unabhängig von dieser Einschränkung - gegebenenfalls für substituenten der Art Z stehen, wobei $X_1$ die Reste, die über ein O-Atom, ein S-Atom oder eine Carbonylgruppe mit dem Aromatenring des Phenols verbunden sind, der Formeln (1)

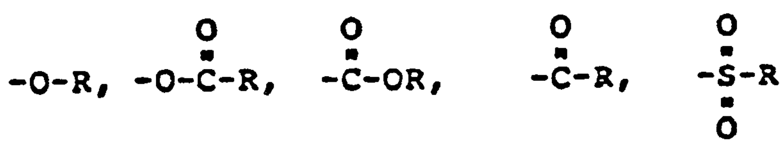

(1),

wobei R gegebenenfalls substituierten Kohlenwasserstoffresten oder heterocyclischen Resten der zuvor unter X definierten Art entspricht, umfaßt, $X_2$ die Reste, die über Stickstoff mit dem Aromatenring des Phenols verbunden sind, der Formeln (2)

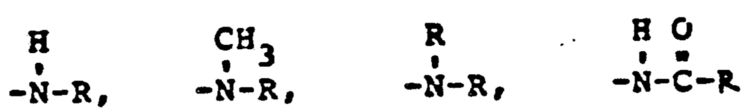

(2);

wobei
R die unter den Formeln (1) angegebene Bedeutung hat, umfaßt, Z den formelmäßig angegebenen Resten entspricht, welche selbst weiter substituiert sein können mit $C_1$-$C_3$-Alkyl, $C_6$-$C_{10}$-Aryl, und Fluor und Chlor

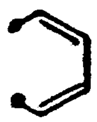
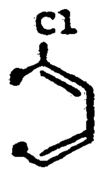
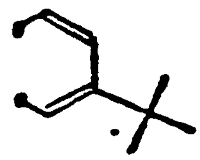
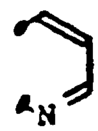
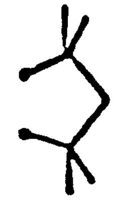

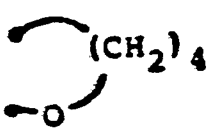
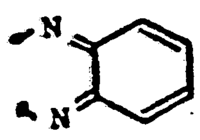
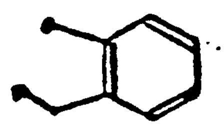
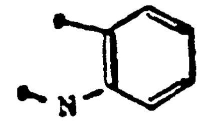

sowie 3,4-Dimethylphenol in Gegenwart von Kupfer oder Kupferverbindungen und einer organischen Stickstoffbase oder einer organischen Phosphorverbindung oder halogenhaltigen Phosphorverbindung als Katalysator bei einem Druck von 10 bis 1000 bar und einer Temperatur von 50 bis 220°C oxidiert werden.

2. Polyarylether hergestellte nach dem Verfahren des Anspruchs 1 mit 7 bis 200 002 wiederkehrenden Einheiten.

3. Reaktionsprodukte gemäß dem Verfahren nach Anspruch 1, dadurch gekennzeichnet, daß sie im wesentlichen die Strukturelemente ortho- und/oder meta-verknüpfter Polyarylether und einen Substituenten X pro etherverknüpftem Aromatenring aufweisen, mit 7 bis 200 002 wiederkehrenden Einheiten.

4. Verfahren nach Anspruch 1, dadurch gekennzeichnet, daß die Phenole der Formel (I) außer X nur einen von Wasserstoff verschiedenen Substituenten wie Fluor, Chlor, Cyan und Methyl tragen.

5. Verfahren nach Anspruch 1, dadurch gekennzeichnet, daß die Phenole der Formel (I) als Substituenten X Chlor oder einen Kohlenwasserstoffrest tragen und alle übrigen Substituenten Wasserstoff sind.

6. Verfahren nach Anspruch 1, dadurch gekennzeichnet, daß zwei oder mehrere verschiedene Phenole entsprechend Formel (I) eingesetzt werden.

7. Verfahren nach Anspruch 1, dadurch gekennzeichnet, daß man als Oxidationsmittel Luft verwendet.

8. Verfahren nach Anspruch 1, dadurch gekennzeichnet, daß man Sauerstoff in Gemischen mit Stickstoff, Kohlendioxid und/oder Kohlenmonoxid verwendet.

## Claims

1. A process for the production of predominantly ortholinked polyarylethers containing 7 to 200,002 recurring units, characterized in that phenols corresponding to the following formula

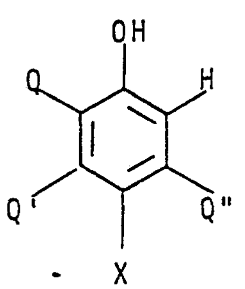

(I)

in which

X represents halogen, such as fluorine, chlorine and bromine, or cyano or optionally substituted $C_1$-$C_{20}$ alkyl, $C_6$-$C_{10}$ aryl, $C_7$-$C_{20}$ aralkyl, $C_5$-$C_{10}$ cycloalkyl and heterocyclic radicals containing 5 to 12 ring atoms, of which up to 3 carbon atoms may be replaced by heteroatoms, such as N, O, S, and the groups $X_1$, $X_2$ and, optionally, Z and in which

Q, Q',, Q'' independently of one another represent hydrogen, substituents of the type described for X containing 2 or 3 carbon atoms, methoxy, trifluoromethyl or phenoxy and, independently of this limitation, optionally substituents of the type Z,

$X_1$ comprising the radicals attached to the aromatic ring of the phenol through an 0 atom and S atom or a

carbonyl group and corresponding to the following formulae

$$-O-R,\ -O-\overset{O}{\overset{\|}{C}}-R,\ -\overset{O}{\overset{\|}{C}}-OR,\ -\overset{O}{\overset{\|}{C}}-R,\ -\underset{\underset{O}{\|}}{\overset{O}{\overset{\|}{S}}}-R \qquad (1),$$

where R represents optionally substituted hydrocarbon radicals or heterocyclic radicals of the type defined above for X, $X_2$ comprises radicals which are attached to the aromatic ring of the phenol through oxygen and which correspond to the following formulae

$$-\overset{H}{\overset{|}{N}}-R,\ -\overset{CH_3}{\overset{|}{N}}-R,\ -\overset{R}{\overset{|}{N}}-R,\ -\overset{H}{\overset{|}{N}}-\overset{O}{\overset{\|}{C}}-R \qquad (2);$$

where R has the same meaning as for formulae (1),
Z corresponds to the radicals defined by formulae and may itself be further substituted by $C_1$-$C_3$ alkyl, $C_5$-$C_{10}$ aryl, and fluorine and chlorine

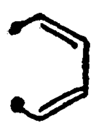
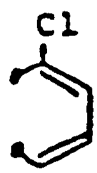
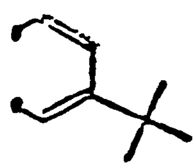
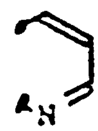
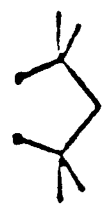

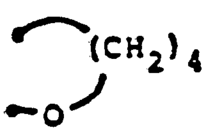
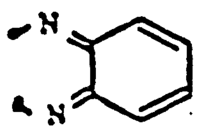
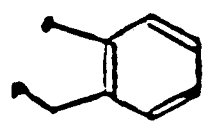
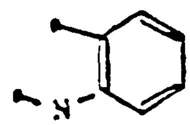

and also 3,4-dimethylphenol
are oxidized in the presence of copper or copper compounds and an organic nitrogen base or an organic phosphorus compound or halogen-containing phosphorus compound as catalyst under a pressure of 10 to 1000 bar and at a temperature of 50 to 220°C.

2. Polyarylethers produced by the process claimed in claim 1 containing 7 to 200,002 recurring units.

3. Reaction products obtained by the process claimed in claim 1, characterized in that they essentially comprise the structural elements of ortho- and/or meta-linked polyarylethers and one substituent X per ether-linked aromatic ring with 7 to 200,002 recurring units.

4. A process as claimed in claim 1, characterized in that, apart from X, the phenols of formula (I) contain only one substituent different from hydrogen, such as fluorine, chlorine, cyano and methyl.

5. A process as claimed in claim 1, characterized in that the phenols of formula (I) contain chlorine or a hydrocarbon radical as substituent X and all the other substituents are hydrogen.

6. A process as claimed in claim 1, characterized in that two or more different phenols corresponding to formula (I) are used.

7. A process as claimed in claim 1, characterized in that air is used as the oxidizing agent.

8. A process as claimed in claim 1, characterized in that oxygen is used in admixture with nitrogen, carbon dioxide and/or carbon monoxide.

**Revendications**

1. Procédé de production de polyaryléthers comportant principalement des liaisons ortho, avec 7 à 200 002 motifs récurrents, caractérisé en ce que des phénols de formule (1)

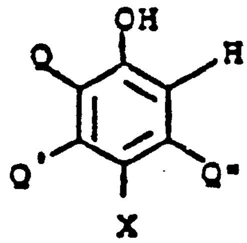

(I)

dans laquelle

X représente un halogène tel que le fluor, le chlore et le brome ou un groupe cyano, ou un groupe alkyle éventuellement substitué ayant 1 à 20 atomes de carbone, un groupe aryle de 6 à 10 atomes de carbone, un groupe aralkyle de 7 à 20 atomes de carbone, un groupe cycloalkyle de 5 à 10 atomes de carbone et des restes hétérocycliques de 5 à 12 atomes cycliques, dont jusqu'à 3 atomes de carbone peuvent être remplacés par des hétéroatomes tels que N, O, S, ainsi que les groupes $X_1$, $X_2$ et le cas échéant Z et dans laquelle

Q, Q', Q'' représentent indépendamment les uns des autres l'hydrogène, des substituants du type mentionné à propos de X avec 2 ou 3 atomes de carbone, méthoxy, trifluorométhyle ou phénoxy ainsi que - indépendamment de cette restriction - le cas échéant des substituants du type de Z, $X_1$ représentant les restes qui sont liés par l'intermédiaire d'un atome de O, d'un atome de S ou d'un groupe carbonyle avec le noyau aromatique du phénol, de formules (1)

$-O-R$, 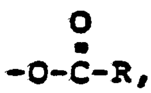, 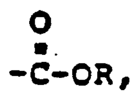, 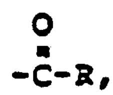, 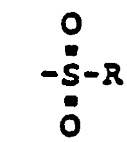 (1),

où R correspond à des restes hydrocarbonés éventuellement substitués ou à des restes hétérocycliques du type défini ci-dessus pour X, $X_2$ comprend les restes qui sont attachés par l'intermédiaire d'azote au noyau aromatique du phénol, de formules (2)

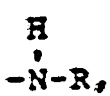, 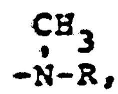, 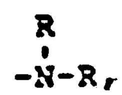, 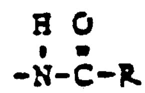 (2);

dans lesquelles

R a la définition indiquée pour les formules (1), Z correspond aux restes indiqués par des formules qui peuvent être eux-mêmes encore substitués avec des substituants alkyle en $C_1$ à $C_3$, aryle en $C_6$ à $C_{10}$ et du fluor et du chlore

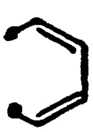 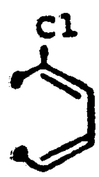 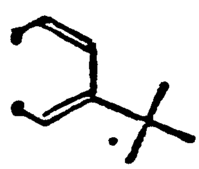 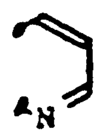 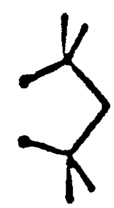

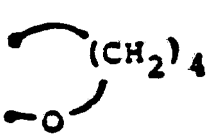 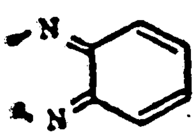 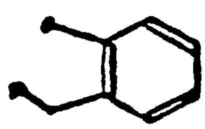 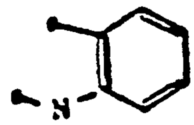 ;

ainsi que 3,4-diméthylphénol,

sont oxydés en présence de cuivre ou de composés du cuivre et d'une base azotée organique ou d'un composé organique de phosphore ou d'un composé halogéné de phosphore comme catalyseur à une pression de 10 à 1000 bars et à une température de 50 à 220°C.

2. Polyaryléthers préparés par le procédé suivant la revendication 1, avec 7 à 200 002 motifs récurrents.

3. Produits de réaction obtenus conformément au procédé suivant la revendication 1, caractérisés en ce qu'ils présentent essentiellement les éléments structuraux de polyaryléthers à liaisons ortho et/ou méta et un substituant X par noyau aromatique à liaison éther, avec 7 à 200 002 motifs récurrents.

4. Procédé suivant la revendication 1, caractérisé en ce que les phénols de formule (I) ne portent, excepté X, qu'un seul substituant différent de l'hydrogène, tel que fluor, chlore, cyano et méthyle.

5. Procédé suivant la revendication 1, caractérisé en ce que les phénols de formule (I) portent comme substituant X du chlore ou un reste hydrocarboné et tous les autres substituants sont de l'hydrogène.

6. Procédé suivant la revendication 1, caractérisé en ce qu'on utilise deux ou plus de deux phénols différents correspondant à la formule (I).

7. Procédé suivant la revendication 1, caractérisé en ce qu'on utilise l'air comme agent oxydant.

8. Procédé suivant la revendication 1, caractérisé en ce qu'on utilise de l'oxygène en mélanges avec de l'azote, de l'anhydride carbonique et/ou de l'oxyde de carbone.